# EUROPEAN PATENT APPLICATION

(11) **EP 4 567 686 A1**
(43) Date of publication of application: **11.06.2025**
(21) Application number: 23307155.4
(22) Date of filing: 07.12.2023
(51) Int. Cl.: G06N 10/40, B82Y 10/00, G21K 1/00

(54) **A METHOD FOR DETERMINING SETS OF MOVES FOR REARRANGING PARTICLES OF AN INITIAL ARRAY OF QUBITS ACCORDING TO A TARGET ARRAY OF QUBITS**

(71) Applicant: Pasqal, 91300 Massy (FR)
(72) Inventor: Ximenez, Bruno, 91300 MASSY (FR); Silvério, Henrique, 91300 MASSY (FR)
(74) Representative: Lavoix

(57) **Abstract**

The present invention relates to a method for determining sets of moves for rearranging particles (P) of an initial array of qubits according to a target array of qubits, the method comprising:
- determining a first set of compression moves for some particles (P) of the initial array of qubits as a function of initial data relative to the initial array of qubits and of target data relative to the target array of qubits so as to obtain an intermediate array of qubits, and
- determining a second set of moves for some particles (P) of the intermediate array of qubits as a function of trapping sites data relative to the positions of trapping sites, of the target data and of the intermediate array of qubits.

## Description

### TECHNICAL FIELD OF THE INVENTION

The present invention concerns a method for determining sets of moves for rearranging particles of an initial array of qubits according to a target array of qubits. The present invention also concerns an associated computer program product. The present invention further concerns a method for rearranging particles trapped in trapping sites of an initial array of qubits according to a target array of qubits. The present invention also concerns an associated computing system.

### BACKGROUND OF THE INVENTION

Contemporary quantum computers and Noisy Intermediate-Scale Quantum (NISQ) computing devices usually require several elaborate operations to prepare a so-called quantum register for storing qubits before actual computing operations can be performed on the qubits.

For example, each computation cycle comprises: preparing the quantum register in a desired configuration, performing quantum computation operations on the quantum register, and reading out the result of the quantum computation operations.

This computation cycle is generally repeated several times when the quantum computing device is in operation.

There is a need to reduce the time required to prepare the quantum register in order to increase the repetition rate of the quantum computer (e.g., the frequency at which the computation cycles can be repeated on the quantum computing device).

For neutral atom-based quantum computers, which use an array of trapped atoms as a quantum register, the different steps in a computing cycle usually comprise the following:
- (a) An atom reservoir such as a magneto-optical trap (MOT) which is loaded to trap and cool down atoms.
- (b) Tweezers are then overlapped with the MOT to load each trap. Stochastically, the traps each end up with one atom captured therein, with a probability of capture of approximately 50 %.
- (c) The atom array is imaged to identify the empty sites. There is then a rearrangement process to prepare a register of atoms corresponding to a desired register configuration.
- (d) The final step consists in a computation task with the atoms array, followed by a measurement or readout of the quantum register to identify the state of each qubit.

For step (c), the current way to do the rearrangement process is to move the atoms one by one from one trap to another with a laser, called moving tweezer, until the traps, corresponding to the desired register configuration, are filled with atoms. The last step of this operation corresponds to discarding the atoms that remain in the traps, but are not part of the desired register configuration.

Considering that, each move requires a certain amount of time e.g. 1 ms, moving around hundreds of atoms to rearrange the entire register into the desired register configuration can be too time consuming. Each move has also a smaller-than-one probability of success and the more atoms are moved, the more errors will accumulate on the register, resulting in a final register configuration that still contains defects (i.e., a configuration that does not match the desired register configuration).

There exist also algorithms based on multi-tweezer moves, in which several atoms are moved at the same time using a plurality of moving optical tweezers operating in parallel.

However, with such methods, the rearrangement algorithms usually require that most of the atoms be moved multiple times, which increases the probability of losing an atom when moving it or when picking it up or releasing it from a trap. Such methods are essentially trading a decrease in rearrangement time for an increased risk of losing atoms during the successive moves. Thus, the resulting registers usually have significant number of defects, which is not entirely satisfactory.

### SUMMARY OF THE INVENTION

Hence, there exists a need for a solution enabling reducing the rearrangement time when rearranging particles of a qubit register so as to match a target configuration, without increasing the errors in the qubit register.

To this end, the invention relates to a method for determining sets of moves for rearranging particles of an initial array of qubits according to a target array of qubits, the method being computer-implemented and comprising the following steps:
- receiving a set of data comprising:
   - trapping sites data relative to the positions of trapping sites forming an array of trapping sites, the array of trapping sites forming a two-dimensional lattice or a three-dimensional lattice, the trapping sites being aligned in each dimension of the lattice along directions of alignment,
   - initial data relative to the initial array of qubits, the initial array of qubits comprising particles trapped in trapping sites of the array of trapping sites, the initial data comprising the positions, called initial positions, of the particles of the initial array of qubits,
   - target data relative to the target array of qubits, the target array of qubits comprising particles trapped in trapping sites of the array of trapping sites, the target data comprising the positions, called target positions, of the particles of the target array of qubits,
- determining a first set of moves for some particles of the initial array of qubits as a function of the initial data and of the target data, the first set of moves enabling to compress together particles and/or groups of particles of the initial array of qubits along a direction of alignment of the lattice so as to increase the number of particles at a target position as compared to the initial array of qubits, the array of qubits obtained after moving particles according to the first set of moves being called intermediate array of qubits, and
- determining a second set of moves for some particles of the intermediate array of qubits as a function of the trapping sites data, of the target data and of the positions of the particles in the intermediate array of qubits, the second set of moves enabling to move only particles of the intermediate array of qubits that have not be moved by a first set of moves, so that there is a particle at each target position.

The method according to the invention may comprise one or more of the following features considered alone or in any combination that is technically possible:
- the step of determining the first set of moves comprises the determination of a compression direction for compressing together the particles, the compression direction being a direction of alignment, enabling to compress the maximum number of particles at the target positions;
- the step of determining the first set of moves comprises the determination of a compression side in the array of trapping sites, the compression side being a side of the array of trapping sites, enabling to minimize the travel length of the particles to be moved with the second set of moves;
- the step of determining the second set of moves comprises obtaining a connectivity graph as a function of the trapping sites data, the connectivity graph comprising all the possible travel paths between the trapping sites of the array of trapping sites, the second set of moves being determined as a function of the connectivity graph, preferably the connectivity graph has been precomputed and is part of the received set of data;

- the second set of moves is determined so as to minimize the length of the travel path of the moved particles among the possible travel paths of the connectivity graph;
- the second set of moves is determined so as to optimize, for each moved particle, the pickup and release time of the particle and the travel time of the particle from its trapping site in the intermediate array of qubits to a empty trapping site at a target position, the pickup and release time is the sum of the time to pick up the particle from its trapping site in the intermediate array of qubits and of the time to release the particle at a target position in an empty trapping site;
- the second set of moves comprises a series of individual moves of particles and/or of moves of small groups of particles when small groups of particles match a group of empty trapping sites at target positions of the array of trapping sites;
- the array of trapping sites forms a two-dimensional lattice with the trapping sites aligned along lines and columns of the lattice, the position of each trapping site being defined by a line and a columns, for example, the shape of the two-dimensional lattice being one among: a square, a rectangle and a triangle;
- the array of trapping sites forms a three-dimensional lattice, the trapping sites being aligned along lines, columns and stacks of the lattice, the position of each trapping site being defined by a line, a column and a stack;
- the particles are polarizable particles sensitive to alternative current Stark shift from lasers, the particles being preferably neutral atoms, such as Rubidium atoms or Strontium atoms.

The invention also relates to an associated computer program product comprising a readable information carrier having stored thereon a computer program comprising program instructions, the computer program being loadable onto a data processing unit and causing a method as previously described to be carried out when the computer program is carried out on the data processing unit.

The present invention further concerns a method for rearranging particles trapped in trapping sites of an initial array of qubits according to a target array of qubits, the method being implemented by a computing system comprising a quantum processor and a calculator, the quantum processor comprising: a source of particles, a trapping sites generator able to generate an array of trapping sites for trapping particles, and a rearrangement unit suitable to rearrange particles trapped in the array of trapping sites, the initial array of qubits having been generated by the source of particles and the trapping sites generator, the method comprising:
- the steps of the method for determining sets of moves as previously described, such steps being implemented by the calculator,
- a first step of moving, by the rearrangement unit, particles of the initial array of qubits according to the first set of moves so as to obtain the intermediate array of qubits, and
- a second step of moving, by the rearrangement unit, particles of the intermediate array of qubits according to the second set of moves so as to obtain a rearranged array of qubits in which all the trapping sites at a target position trap a particle.

The method according to the invention may comprise one or more of the following features considered alone or in any combination that is technically possible:
- the method also comprises a phase of emptying trapping sites of the rearranged array of qubits that are not at a target position so as to obtain the target array of qubits;
- the step of determining the second set of moves is computed in parallel to the first step of moving particles according to the first set of moves.

The invention also relates to a computing system configured for implementing a rearrangement method as previously described, the computing system comprising:
- a quantum processor comprising:
   - a source of particles,
   - a trapping sites generator able to generate an array of trapping sites for trapping particles,
   - a rearrangement unit suitable to rearrange particles trapped in the array of trapping sites, and
- a calculator, such as a classical computer.

### BRIEF DESCRIPTION OF THE DRAWINGS

The invention will be easier to understand in view of the following description, provided solely as an example and with reference to the appended drawings in which:
- Figure 1 is a schematic view of an example of a computing system comprising a quantum processor and a calculator,
- Figure 2 is a schematic view of an example of a flow chart of a method for rearranging particles trapped in trapping sites of an initial array of qubits according to a target array of qubits,
- Figure 3 is an example of an implementation of a first step of moving particles of an initial array of qubits according to a first set of moves so as to obtain an intermediate array of qubits, and
- Figure 4 is an example of an implementation of a second step of moving particles of the intermediate array of qubits of figure 3, according to a second set of moves so as to obtain a rearranged array of qubits in which all the trapping sites at a target position trap a particle.

### DETAILED DESCRIPTION OF SOME EMBODIMENTS

In the description, the terms "suitable for", "able to" and "configured for" are considered equivalent.

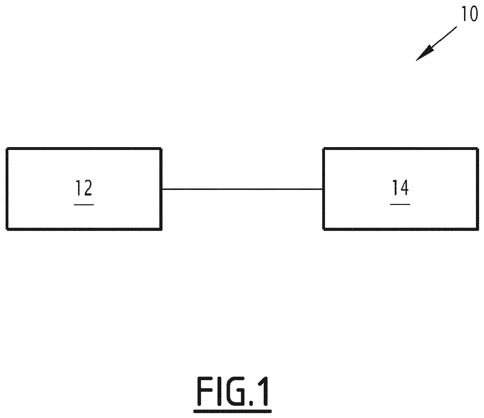

A computing system 10 is illustrated on figure 1. The computing system 10 is configured to implement a method for rearranging particles P trapped in trapping sites of an initial array of qubits according to a target array of qubits. An array of qubits is also called a qubit register or a quantum register.

The computing system 10 comprises a quantum processor 12 (quantum processing unit or QPU) and a calculator 14.

In an example, the quantum processor 12 comprises a source of particles P, a generator of trapping sites for particles P, a detecting device, a rearrangement unit and other hardware elements.

In the case of neutral atoms, the source of particles P comprises a vacuum chamber in which the particles P (for example atoms) are located. In particular, during use, a vacuum is created in the vacuum chamber and a dilute atomic vapor is formed in the vacuum chamber. Various cooling processes can be used to cool the dilute atomic vapor, for instance laser cooling, so that the atoms can be trapped. Other embodiments are nonetheless possible.

The generator of trapping sites is able to generate a laser beam which when focused generates an array of trapping sites for particles P (e.g., optical tweezers).

In an example of implementation, the generator of trapping sites comprises a laser source, or equivalent, able to generate a laser beam and a beam shaper able to shape the laser beam (e.g., to impart a specific intensity pattern to the laser beam) so as to obtain an array of trapping sites for particles P when the laser beam is focused.

The beam shaper is, for example, a spatial light modulator (SLM), such as an optical phase modulator, preferably a liquid crystal optical modulator (LCOS-SLM). In another example, the beam shaper comprises one or more acousto-optical deflectors (AOD), or a device with metasurfaces, or micro lens arrays, for example with fixed phase pattern (lithography).

The detecting device is configured to detect the presence of particle(s) in the qubit register. The detecting device is, for example, a camera such as a charge-coupled device (CCD) camera, or an Electron-Multiplying CCD (EMCCD) camera, or any suitable imaging technology. For example, in the case of atoms, the camera is suitable to detect the fluorescence emitted from the atoms.

The rearrangement unit is configured for moving particles P from one trapping site to another trapping site. The rearrangement unit comprises a generator of optical moving tweezers. The generator of optical moving tweezers comprises a laser source or equivalent, able to generate a laser beam and a beam shaper able to shape the laser beam (e.g., to impart a specific intensity pattern to the laser beam) so as to obtain an array of optical moving tweezers for particles P when the laser beam is focused.

The beam shaper is, for example, a spatial light modulator (SLM), such as an optical phase modulator, preferably a liquid crystal optical modulator (LCOS-SLM). In another example, the beam shaper comprises one or more acousto-optical deflectors (AOD), or a device with metasurfaces, or micro lens arrays, for example with fixed phase pattern (lithography).

The hardware elements enable to manipulate the particles P trapped in the trapping sites and forming the qubits, so as to perform quantum operations on the qubits.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331/q-2020-09-21-327. Other embodiments are nonetheless possible.

Typically, the quantum processor 12 uses the quantum properties of matter, such as superposition and entanglement, to perform operations on the qubits. In particular, a qubit refers to a two-level quantum system.

In a non-limiting example, a qubit may comprise two basic quantum states I0> and I1> representing the possible quantum states of the qubit. According to the superposition principle of quantum mechanics, any superposition of the form al0> + bI1> (a and b being complex numbers and aa*+bb*=1) is a possible quantum state of the qubit.

The particles P meant to be trapped in the trapping sites are polarizable particles P sensitive to alternative current (AC) Stark shift from lasers.

Preferably, the particles P are atoms, and in particular electrically neutral atoms. Neutral atoms are, for example, alkali atoms (such as Rubidium or Cesium atoms) or alkaline-earth atoms (such as Strontium or Ytterbium atoms).

In a variant, the quantum array of the quantum processor 12 is formed of qubits which are chosen among the following elements: neutral atoms, superconducting qubits, NV centers (nitrogen-vacancy centers), photons, ions, electrons, molecules and quantum dots.

The calculator 14 is, for example, a classical computer. The calculator 14 comprises typically a processor comprising a data processing unit, memories, and a reader for information media. Eventually, the calculator 14 comprises a human machine interface, such as a keyboard, and a display.

In an example of implementation, the calculator 14 interacts with a computer program product. The computer program product comprises an information medium. The information medium is a medium readable by the calculator 14, usually by the data processing unit. The readable information medium is a medium suitable for storing electronic instructions and capable of being coupled to a computer system bus. On the information medium is stored the computer program comprising program instructions. The computer program is loadable on the data processing unit and is adapted to entail some steps of the rearrangement method that will be described later in the description (receiving step 100 and determination steps 110 and 120), when the computer program is loaded on the processing unit of the calculator 14.

In a variant, the calculator 14 is under the form of an electronic circuit comprising microcontrollers or integrated circuits.

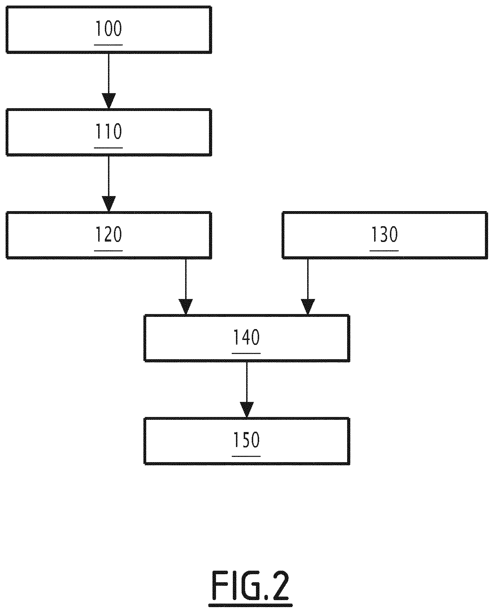

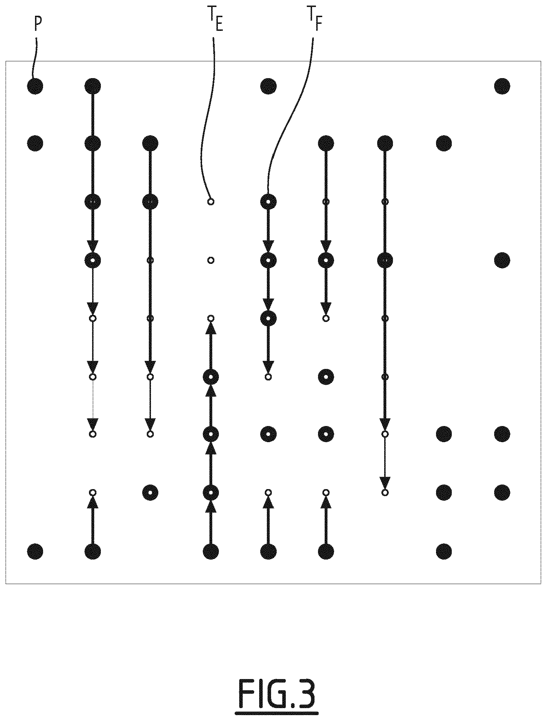

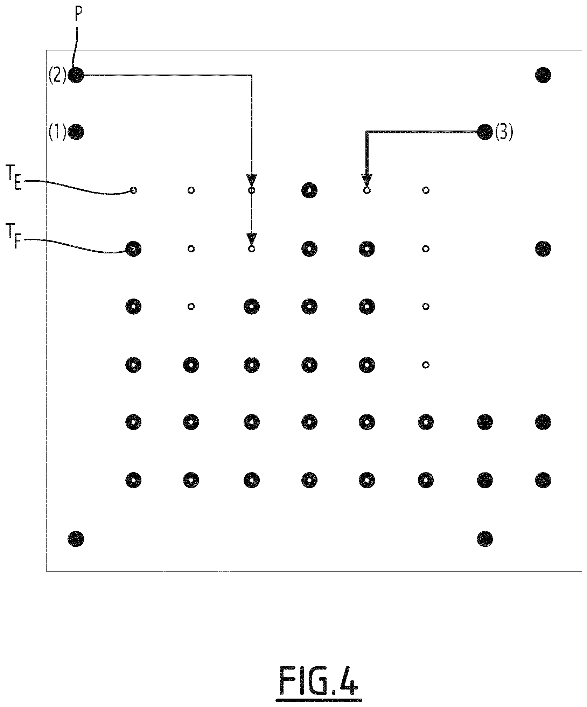

A method for rearranging particles P trapped in trapping sites of an initial array of qubits according to a target array of qubits, will now be described with reference to the organigram of figure 2 and to the specific examples illustrated on figures 3 and 4. The method is implemented by the computing system 10.

For example, the initial array of qubits has been generated previously by loading particles P generated by the source of particles P of the quantum processor 12 in the array of trapping sites generated by the generator of trapping sites of the quantum processor 12. The initial array of qubits has typically been generated at random without following a specific pattern for the filling of the trapping sites. In a variant, the particles P of the initial array of qubits have already been rearranged so as to correspond to an initial pattern.

The rearranging method comprises a step 100 of receiving a set of data. The receiving step 100 is, for example, implemented by the calculator 14.

The set of data comprises trapping sites data, initial data and target data.

The trapping sites data are data relative to the positions of trapping sites forming an array of trapping sites.

The array of trapping sites forms a two-dimensional lattice. The trapping sites of the array of trapping sites are aligned along lines and columns of the lattice. The lines and the columns of the lattice are along different directions which are perpendicular directions. In a variant, such different directions are not perpendicular (like in a triangular lattice for example).

The position of each trapping site is defined by a line and a column.

The trapping sites have for example been generated by the generator of trapping sites according to a predetermined pattern.

Preferably, the array of trapping sites forms a lattice whose shape is one among: a square, a rectangle and a triangle. Other embodiments are nonetheless possible.

The trapping sites data are for example communicated by an operator or by a command enabling to control the generator of trapping sites.

The initial data are data relative to the initial array of qubits. The initial array of qubits comprises particles P trapped in trapping sites of the array of trapping sites.

The number of particles P of the initial array of qubits is inferior to the number of trapping sites. The loading probability usually depends on the atomic loading techniques used. For example, if the trapping probability is in the order of 50 %, the initial array of qubits comprises a number of particles P which is typically inferior to 60 % of the number of trapping sites. However, there are techniques (eg gray mollasses) that permit reaching higher loading probabilities, so the value of 50% is not ubiquitous.

The initial data comprises the positions, called initial positions, of the particles P of the initial array of qubits. The position of a particle is the position of the trapping sites in which the particle is trapped. Hence, the position of a particle corresponds to a line and a column in the array of trapping sites.

The initial data are for example obtained through measures carried out on the array of qubits, for example, via the detecting device.

The target data are data relative to the target array of qubits. The target array of qubits comprises particles P trapped in trapping sites of the array of trapping sites. The trapping sites that do not trap particles P in the target array of qubits are considered as being reservoir trapping sites. A reservoir trapping site is a trapping site that can trap a particle during the preparation of the array of qubits, but which is then emptied of particles once the array of qubits has been prepared.

The number of particles P of the target array of qubits is inferior or equal to the number of particles P in the initial array of qubits, preferably strictly inferior. This ensures to have sufficient particles P to fill all the trapping sites at target positions.

The target data comprise the positions, called target positions, of the particles P of the target array of qubits.

The target data are for example communicated by an operator as a function of the computations to be performed on the array of qubits.

The rearranging method comprises a step 110 of determining a first set of moves for some particles P of the initial array of qubits as a function of the initial data and of the target data. The determination step 110 is, for example, implemented by the calculator 14.

The first set of moves enables to compress together particles P and/or groups of particles of the initial array of qubits so as to increase the number of particles P at a target position as compared to the initial array of qubits. The term "compression" means that the particles P are moved so as to be closer to each other. In other words, the first set of moves aims at moving particles P so that as many particles be at their final position (target position).

Preferably, the particles P are compressed so as to maximize the number of particles P at a target position.

The array of qubits obtained after moving particles P according to the first set of moves is called intermediate array of qubits.

Preferably, the determination step 110 comprises the determination of a compression direction for compressing together the particles P. The compression direction is either a direction along the lines or a direction along the columns of the array of trapping sites, enabling to compress the maximum number of particles P at the target positions. Hence, all the particles P moved with the first set of moves are moved along the same direction, which is the compression direction.

Preferably, the determination step 110 comprises the determination of a compression side in the array of trapping sites. The compression side is a side of the array of trapping sites, enabling to minimize the travel length of the particles P to be moved with the second set of moves. Hence, all the particles P moved with the first set of moves are moved towards the same side of the array of trapping sites, which is the compression side.

For example, the compression side is a side of the array of trapping site whose border comprises a smaller concentration of remaining particles (particles which are not at a target position and which have not been moved) at the end of the compressions, than the other sides.

Figure 3 illustrates the compression of particles P of an initial array of qubits along the columns of the array of trapping sites and at the bottom of the array of trapping sites because such a compression direction enables to maximize the number of particles P at target positions and such a compression side enables to minimize the travel length of the particles P to be moved with the second set of moves.

In particular, figure 3 illustrates the initial array of qubits with the particles P positioned at their initial positions (which might already be target positions or any other positions). In the example of figure 3, not all the lines and the columns of the array of trapping sites are filled with a particle. The trapping sites at target positions are highlighted on figure 3: the symbol T_{F} indicates a trapping site, which traps a particle at a target position, and the symbol T_{E} indicates a trapping site which is emptied of particle at a target position. To avoid overloading the figures 3 and 4, only one of each reference P, T_{F} and T_{E} are represented on these figures. On figure 3, the arrows indicate the compression movements enabling to move some particles P from their initial position to another position, which is a target position (either move from a target position to another target position, or move from another position to a target position). An intermediate array of qubits results from the compression of all the particles P according to the arrows.

The rearranging method comprises a step 120 of determining a second set of moves for some particles P of the intermediate array of qubits as a function of the trapping sites data, of the target data and of the positions of the particles P in the intermediate array of qubits. The determination step 120 is, for example, implemented by the calculator 14.

The second set of moves enables to move only particles P of the intermediate array of qubits that have not be moved by a first set of moves, so that there is a particle at each target position in the array of trapping sites. This enables to minimize the probability of losing a particle by picking and releasing a particle several times.

Preferably, the determination step 120 comprises obtaining a connectivity graph as a function of the trapping sites data. The connectivity graph comprises all the possible travel paths between the trapping sites of the array of trapping sites. The second set of moves is determined as a function of the connectivity graph.

In particular, the second set of moves is determined so as to minimize the length of the travel path of the moved particles P among the possible travel paths of the connectivity graph.

For example, the second set of moves are determined by taking the closest particle from those outside the target array of qubits and having it move in a straight line from a side of the array of trapping sites. Such a side being preferably a side where less particles are at target positions or the opposite side of the side where the particles have been compressed with the first set of moves. This way, the trajectory is guaranteed to avoid collisions regardless of the filling of the other stacks.

Preferably, the connectivity graph has been precomputed and is part of the received set of data. In a variant, the connectivity graph is computed during step 120.

Preferably, the second set of moves is determined so as to optimize, for each moved particle, the pickup and release time of the particle and the travel time of the particle from its trapping site in the intermediate array of qubits to an empty trapping site at a target position. The pickup and release time is the sum of the time to pick up the particle from its trapping site in the intermediate array of qubits and of the time to release the particle at a target position in an empty trapping site. For example, the pickup and release time and the travel time are input data are optimized using a cost matrix.

Preferably, the second set of moves comprises a series of individual moves of particles P and/or of moves of small groups of particles P when small groups of particles P (for example two or three particles) match a group of empty trapping sites at target positions of the array of trapping sites.

Figure 4 illustrates individual moves of particles P in an intermediate array of qubits so as to fill all the trapping sites at a target position with a particle, while minimizing the length of the paths of the moved particles P. In particular, the particle P with the symbol (1) is moved first, then the one with the symbol (2), and so on.

The rearranging method comprises a step 130 of moving particles P of the initial array of qubits according to the first set of moves so as to obtain the intermediate array of qubits. The first moving step 130 is for example carried out by the rearrangement unit.

For example, the calculator 14 sends a command of moving particles P according to the first set of moves to the rearrangement unit. The rearrangement unit then moves together particles P according to the first set of moves. The moving of the particles P according to the first set of moves is for example performed by multiple moving tweezers of the rearrangement unit.

Preferably, the step 120 of determining the second set of moves is computed in parallel to the first step 130 of moving particles P according to the first set of moves.

In a variant, the determination step 120 is carried out after the first step 130 of moving particles P.

The rearranging method comprises a step 140 of moving particles P of the intermediate array of qubits according to the second set of moves so as to obtain a rearranged array of qubits in which all the trapping sites at a target position trap a particle. The second moving step 140 is for example carried out by the rearrangement unit.

For example, the calculator 14 sends a command of moving particles P according to the second set of moves to the rearrangement unit. The rearrangement unit then moves together particles P according to the second set of moves. The moving of the particles P according to the second set of moves is for example performed by individual moving tweezers of the rearrangement unit.

In an example of embodiment, the rearranging method also comprises a phase of emptying trapping sites of the rearranged array of qubits that are not at a target position so as to obtain the target array of qubits. For example, a laser beam which is repulsive for particles trapped in trapping sites is sent to the trapping sites that are not at a target position.

Hence, the above method combines multi- and single-tweezer moves for rearranging particles P. The determination of the first set of moves, which are compression moves, and of second sets of moves, which are individual or groups of particles P moves, enables reducing the rearrangement time when rearranging particles P of a qubit register so as to match a target configuration. In addition, the particles P are at most moved once, which enables reducing the errors in the qubits register as compared to a state of the art where the particles P would have been moved several times.

In particular, in a preferred embodiment, the method comprises a line-by-line compression stage along the preferred direction. In essence, it tries to move as many particles P as possible to their final positions through multi-tweezer movements. This results in stacks of particles P, of different lengths, along the same direction.

Then, it stacks the remaining particles P one-by-one or by groups of particles P if appropriate, for example by taking the closest particle from those outside the target array and having it move in a straight line from one side (top for example) of the stack. This way, the trajectory is guaranteed to avoid collisions regardless of the filling of the other stacks. Preferably, all possible paths are precomputed through a connectivity graph, so they only need to be accessed at runtime.

Furthermore, the positions of the particles P after the first stage can be easily computed, which would allow for the single-tweezer moves to be computed while the multi-tweezer moves are being executed.

It should be noted that the above description deals with the specific case where the array of trapping sites forms a two-dimensional lattice. However, the invention is not restricted to two-dimensional lattice, and applies also to three-dimensional lattice.

In this case, the trapping sites are aligned along lines, columns and stacks (third dimension) of the lattice. The position of each trapping site is defined by a line, a column and a stack. The lines, the columns and the stacks of the lattice are along different directions which could be perpendicular directions, but could also be non-perpendicular directions.

Hence, in the invention, the trapping sites are aligned in each dimension of the lattice along directions of alignment (lines, columns and if applicable stacks). The first set of moves enabling to compress together particles P and/or groups of particles of the initial array of qubits along a compression direction, which is one of the direction of alignment of the lattice, so as to increase the number of particles P at a target position as compared to the initial array of qubits.

The person skilled in the art will understand that the embodiments and variants described above in the description can all be combined provided that they are technically compatible. Many other embodiments are possible without departing from the scope of the invention defined in the appended claims.

## Claims

1. A method for determining sets of moves for rearranging particles (P) of an initial array of qubits according to a target array of qubits, the method being computer-implemented and comprising the following steps:
- receiving a set of data comprising:
• trapping sites data relative to the positions of trapping sites forming an array of trapping sites, the array of trapping sites forming a two-dimensional lattice or a three-dimensional lattice, the trapping sites being aligned in each dimension of the lattice along directions of alignment,
• initial data relative to the initial array of qubits, the initial array of qubits comprising particles (P) trapped in trapping sites of the array of trapping sites, the initial data comprising the positions, called initial positions, of the particles (P) of the initial array of qubits,
• target data relative to the target array of qubits, the target array of qubits comprising particles (P) trapped in trapping sites of the array of trapping sites, the target data comprising the positions, called target positions, of the particles (P) of the target array of qubits,
- determining a first set of moves for some particles (P) of the initial array of qubits as a function of the initial data and of the target data, the first set of moves enabling to compress together particles (P) and/or groups of particles of the initial array of qubits along a direction of alignment of the lattice so as to increase the number of particles (P) at a target position as compared to the initial array of qubits, the array of qubits obtained after moving particles (P) according to the first set of moves being called intermediate array of qubits, and
- determining a second set of moves for some particles (P) of the intermediate array of qubits as a function of the trapping sites data, of the target data and of the positions of the particles (P) in the intermediate array of qubits, the second set of moves enabling to move only particles (P) of the intermediate array of qubits that have not be moved by a first set of moves, so that there is a particle at each target position.

2. A method according to claim 1, wherein the step of determining the first set of moves comprises the determination of a compression direction for compressing together the particles (P), the compression direction being a direction of alignment, enabling to compress the maximum number of particles (P) at the target positions.

3. A method according to claim 1 or 2, wherein the step of determining the first set of moves comprises the determination of a compression side in the array of trapping sites, the compression side being a side of the array of trapping sites, enabling to minimize the travel length of the particles (P) to be moved with the second set of moves.

4. A method according to any one of claims 1 to 3, wherein the step of determining the second set of moves comprises obtaining a connectivity graph as a function of the trapping sites data, the connectivity graph comprising all the possible travel paths between the trapping sites of the array of trapping sites, the second set of moves being determined as a function of the connectivity graph, preferably the connectivity graph has been precomputed and is part of the received set of data.

5. A method according to claim 4, wherein the second set of moves is determined so as to minimize the length of the travel path of the moved particles (P) among the possible travel paths of the connectivity graph.

6. A method according to any one of claims 1 to 5, wherein the second set of moves is determined so as to optimize, for each moved particle, the pickup and release time of the particle and the travel time of the particle from its trapping site in the intermediate array of qubits to a empty trapping site at a target position, the pickup and release time is the sum of the time to pick up the particle from its trapping site in the intermediate array of qubits and of the time to release the particle at a target position in an empty trapping site.

7. A method according to any one of claims 1 to 6, wherein the second set of moves comprises a series of individual moves of particles (P) and/or of moves of small groups of particles (P) when small groups of particles (P) match a group of empty trapping sites at target positions of the array of trapping sites.

8. A method according to any one of claims 1 to 7, wherein the array of trapping sites forms a two-dimensional lattice with the trapping sites aligned along lines and columns of the lattice, the position of each trapping site being defined by a line and a columns, for example, the shape of the two-dimensional lattice being one among: a square, a rectangle and a triangle.

9. A method according to any one of claims 1 to 7, wherein the array of trapping sites forms a three-dimensional lattice, the trapping sites being aligned along lines, columns and stacks of the lattice, the position of each trapping site being defined by a line, a column and a stack.

10. A method according to any one of claims 1 to 9, wherein the particles (P) are polarizable particles (P) sensitive to alternative current Stark shift from lasers, the particles (P) being preferably neutral atoms, such as Rubidium atoms or Strontium atoms.

11. A computer program product comprising a readable information carrier having stored thereon a computer program comprising program instructions, the computer program being loadable onto a data processing unit and causing a method according to any one of claims 1 to 10 to be carried out when the computer program is carried out on the data processing unit.

12. A method for rearranging particles (P) trapped in trapping sites of an initial array of qubits according to a target array of qubits, the method being implemented by a computing system (10) comprising a quantum processor (12) and a calculator (14), the quantum processor (12) comprising: a source of particles (P), a trapping sites generator able to generate an array of trapping sites for trapping particles (P), and a rearrangement unit suitable to rearrange particles (P) trapped in the array of trapping sites, the initial array of qubits having been generated by the source of particles (P) and the trapping sites generator, the method comprising:
- the steps of the method for determining sets of moves according to any one of claims 1 to 11, such steps being implemented by the calculator (14),
- a first step of moving, by the rearrangement unit, particles (P) of the initial array of qubits according to the first set of moves so as to obtain the intermediate array of qubits, and
- a second step of moving, by the rearrangement unit, particles (P) of the intermediate array of qubits according to the second set of moves so as to obtain a rearranged array of qubits in which all the trapping sites at a target position trap a particle.

13. A method according to claim 12, wherein the method also comprises a phase of emptying trapping sites of the rearranged array of qubits that are not at a target position so as to obtain the target array of qubits.

14. A method according to claim 12 or 13, wherein the step of determining the second set of moves is computed in parallel to the first step of moving particles (P) according to the first set of moves.

15. A computing system (10) configured for implementing a rearrangement method according to any one of claims 11 to 14, the computing system (10) comprising:
- a quantum processor (12) comprising:
• a source of particles (P),
• a trapping sites generator able to generate an array of trapping sites for trapping particles (P),
• a rearrangement unit suitable to rearrange particles (P) trapped in the array of trapping sites, and
- a calculator (14), such as a classical computer.
